Europäisches Patentamt

European Patent Office

Office européen des brevets

(19)

(11) Publication number: 0 344 622
A2

# (12) EUROPEAN PATENT APPLICATION

(21) Application number: 89109479.9

(22) Date of filing: 26.05.89

(51) Int. Cl.4: **G06F 3/14** , **G09G 3/28** , **H04N 3/12**

(30) Priority: 28.05.88 JP 130924/88

(43) Date of publication of application:
06.12.89 Bulletin 89/49

(84) Designated Contracting States:
DE FR GB IT

(71) Applicant: **Kabushiki Kaisha Toshiba
72, Horikawa-cho Saiwai-ku
Kawasaki-shi(JP)**

(72) Inventor: **Zenda, Hiroki c/o Intellectual
Property Division
K.K. Toshiba 1-1 Shibaura 1-chome
Minata-ku Tokyo 105(JP)**

(74) Representative: **Lehn, Werner, Dipl.-Ing. et al
Hoffmann, Eitle & Partner Patentanwälte
Arabellastrasse 4
D-8000 München 81(DE)**

(54) Plasma display control system.

(57) A modulated pulse generator (113) included in a plasma display (4) generates a modulated pulse (MP) whose pulse widths are gradually increased for a higher luminance. An anode driver (118) for a plasma/display panel (119) includes a pulse width generation (213) for pulse-width modulating a display data latched by a latch circuit (212) by the modulated pulse (MP) and outputs anode pulses (ANPO through ANP639) with increased width toward high luminance which is increased in accordance with the gradation level of pixel data.

F I G. 2

EP 0 344 622 A2

## Plasma display control system

The present invention relates to a plasma display control system for driving a plasma display at the display timing of a CRT display.

In a computer system such as a personal computer, a personal work station, or the like, which comprises a plasma display unit as standard equipment, and allows a color display unit to be selectively connected thereto, data to be processed which includes color elements cannot be displayed by the plasma display unit.

Conventionally, when the plasma display unit performs gradation display, display data has a gradation level. However, a gradation display has uniform gradation and luminance levels but cannot perform a clear division display like a color display on the color display unit.

It is an object of the present invention to provide a plasma display control system wherein gradation correction matching with a CRT display unit (color display unit) can be easily performed internally by a plasma display unit without using an external mechanism to the plasma display unit, and hence, a display of the plasma display unit can be controlled at a gradation level matching with a display of the CRT display unit without controlling gradation correction at the plasma display side.

In order to achieve the above object, according to the present invention, there is provided a plasma display control system which comprises a plasma display having anode and cathode electrodes for displaying a change in color using a gradation level. It allows a CRT display to be connected thereto as an option and comprises: a color CRT display controller for outputting a vertical sync signal, a horizontal sync signal, and display data having a given gradation level to the color CRT display and the plasma display; luminance setting means for variably setting the luminance of the plasma display; variable modulated pulse generating means for receiving the vertical and horizontal sync signals output from the CRT display controller and the luminance setting by the luminance setting means, and generating a variable modulated pulse whose pulse width is increased as luminance is increased; and drive means for driving the plasma display, the drive means comprising anode pulse generating means for generating an anode pulse having a pulse width unique to the gradation level indicated by the display data and applied to the anode electrodes on the basis of the variable modulated pulse generated by the variable modulated pulse generating means.

Other objects and features of the present invention will be apparent from the following description taken in connection with the following drawings, in which:

Fig. 1 is a block diagram showing the overall arrangement of a plasma display control system according to the present invention;

Fig. 2 is a block diagram showing an internal arrangement of the plasma display shown in Fig. 1;

Fig. 3 is a block diagram showing connections among the display panel, the cathode driver, and the anode driver shown in Fig. 2;

Figs. 4A through 4F are timing charts exemplifying a modulated pulse and anode pulses at various gradation levels generated on the basis of the modulated pulse in the embodiment shown in Fig. 3;

Fig. 5A is a graph showing the relationship between an anode pulse width and a gradation level, and Fig. 5B is a graph showing the relationship between a display luminance and a gradation level;

Fig. 6 is a block diagram showing in detail the modulated pulse generator shown in Fig. 2;

Figs. 7A through 7F are timing charts showing a conventional modulated pulse and anode pulses at various gradation levels generated based on the modulated pulse in correspondence with Figs. 4A through 4F;

Fig. 8 is a graph showing the relationship between a display luminance and an anode pulse width; and

Figs. 9A and 9B are graphs showing the relationships between a gradation level and an anode pulse width and between the gradation level and a display luminance, respectively.

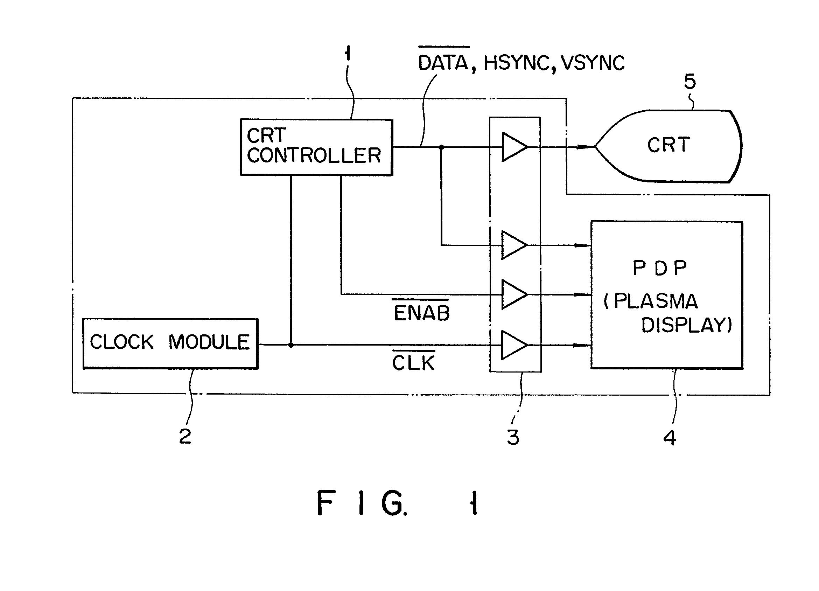

Fig. 1 is a block diagram showing the overall arrangement of a plasma display controller according to the present invention.

In Fig. 1, a plasma display controller 6 according to the present invention has CRT controller 1 which outputs various display control signals for controlling display of a cathode ray tube (CRT) 5 and a plasma display (PDP) 4. More specifically, the CRT controller 1 outputs a vertical sync signal (VSYNC), a horizontal sync signal (HSYNC), and an enable signal (ENAB) for controlling the output timing of display data (DATA), which are generated according to display timings of the CRT 5, to the CRT 5 and the PDP 4 through a driver 3. The CRT controller 1 described above may adopt the PVGAI available from Paradise, U.S.A. The polarities of the vertical sync signal (VSYNC) and the horizontal sync signal (HSYNC), which are outputted from the CRT controller 1, are changed when the resolution of the display of the CRT 5 and the PDP 4 are to be changed. A clock module 2 supplies a clock signal CLK to the PDP 4 through the driver 3.

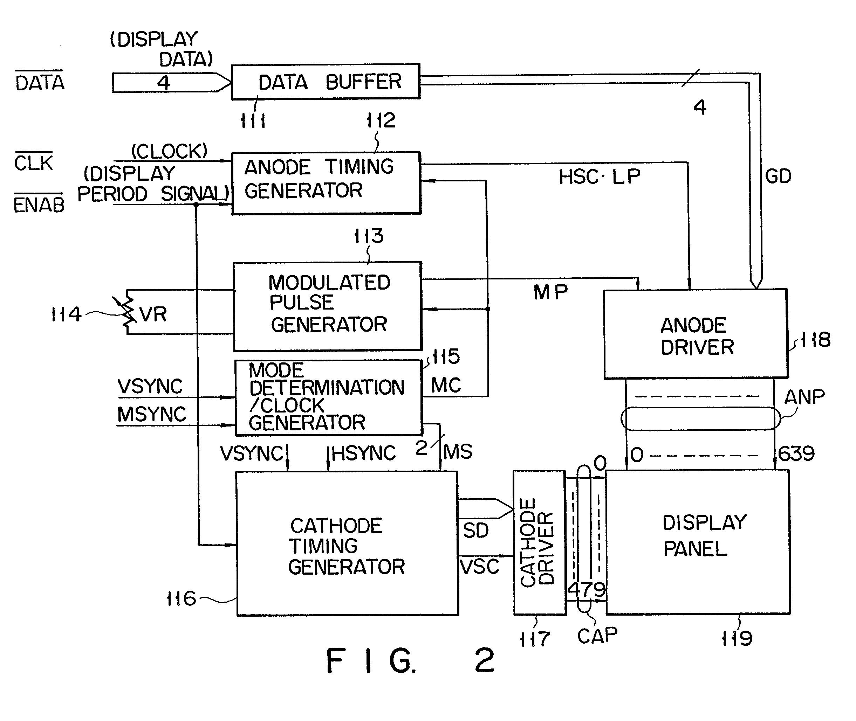

Fig. 2 is a block diagram showing the internal arrangement of the PDP 4.

In Fig. 2, a data buffer 111 successively receives the display data DATA (4 bits/pixel; 16 gradation levels) supplied from the CRT controller 1, and outputs it as gradation data (GD). An anode timing generator 112 receives a clock (CLK), a display period signal (ENAB), and a clock (MC) from a mode discrimination/clock generator 115, and outputs a horizontal shift clock (HSC), a latch pulse (LP), and the like. A modulated pulse generator 113 generates a modulated pulse (MP) on the basis of the clock (MC) generated by the mode discrimination/clock generator 115. A variable resistor 114 performs uniform luminance adjustment for the entire gradation by changing a pulse width of the modulated pulse (MP) generated from the modulated pulse generator 113. The mode discrimination/clock generator 115 determines the display resolution of a display screen on the basis of a negative/positive polarity of the vertical sync signal (VSYNC) and the horizontal sync signal (HSYNC), outputs a mode switching signal (MS), and also generates various internal clocks (MC). A cathode timing generator 116 receives the display period signal (ENAB), the vertical sync signal (VSYNC), the horizontal sync signal (HSYNC), the mode switching signal (MS: 2 bits) generated from the mode discrimination/clock generator 115, and generates signals such as scanning data (SD), a vertical shift clock (VSC), and the like for driving cathode electrodes. A cathode driver 117 receives the scanning data (SD) and the vertical shift clock (VSC) generated from the cathode timing generator 116, and outputs cathode pulses (CAPO through CAP479) for driving the cathode electrodes. An anode driver 118 receives the gradation data from the data buffer 111, and the horizontal shift clock (HSC) and the latch pulse (LP) from the anode timing generator 112, fetches the gradation data (GD) in its internal shift register in response to the horizontal shift clock (HSC), and performs pulse control in response to the latch pulse (LP), to output anode pulses (ANP0 through ANP639) each having a pulse width corresponding to gradation of pixel data. A display panel 119 receives at the cathode electrodes the cathode pulses (CAP0 through CAP479) output from the cathode driver 117, also receives at the anode electrodes the anode pulses (ANP0 through ANP639). and outputs display data at a maximum display resolution of 640 x 480 dots (16 gradation levels).

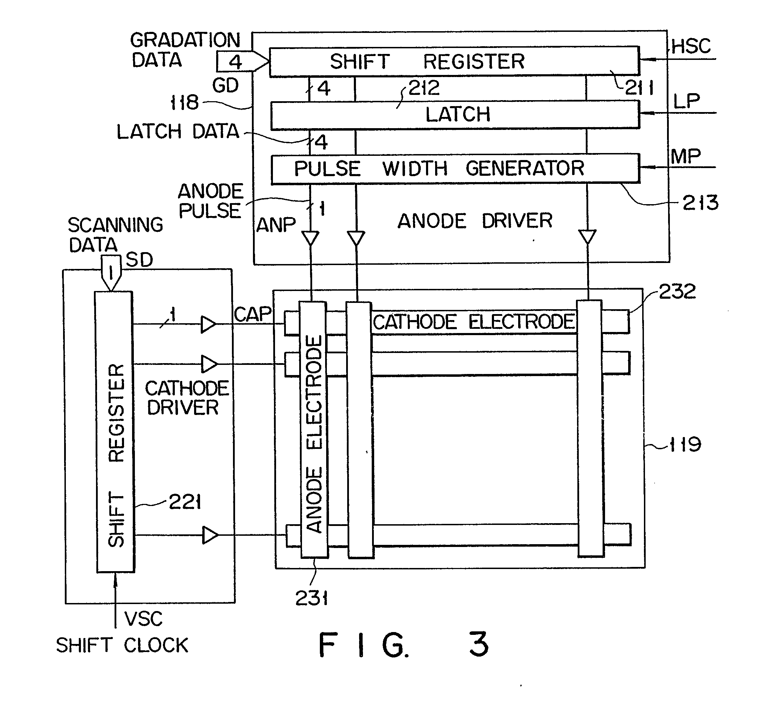

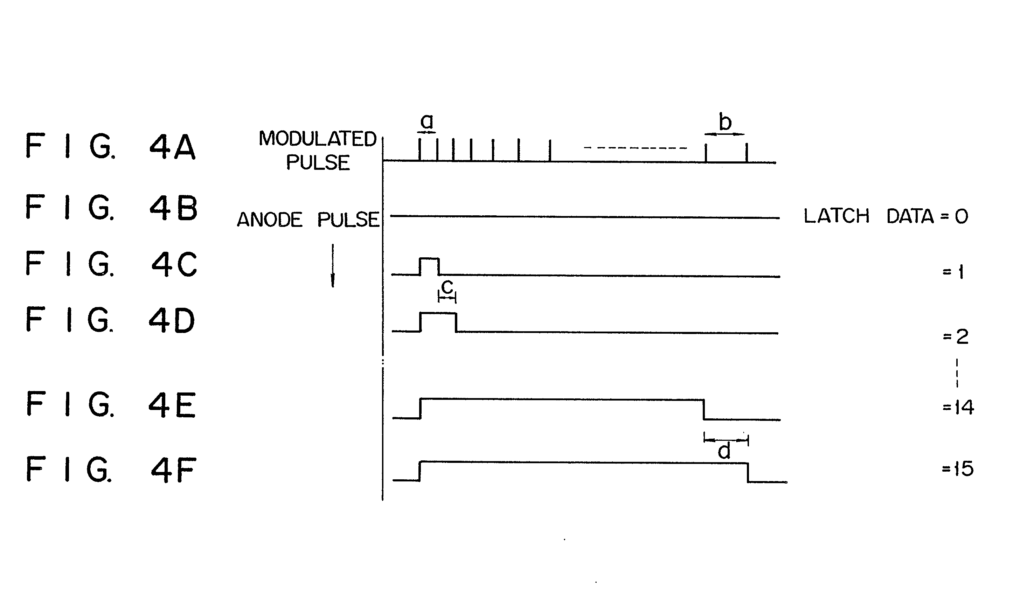

Fig. 3 is a block diagram showing connections among the display panel 119, the cathode driver 117, and the anode driver 118 shown in Fig. 2. The anode driver 118 comprises a shift register 211 for fetching the gradation data (GD) in synchronism with the horizontal shift clock (HSC), a latch 212 for latching display data stored in the shift register 211 in response to the latch pulse (LP), and a pulse width generator 213 for pulse-width modulating the display data latched by the latch 212 by the modulated pulse (MP). The MP pulse width is gradually increased toward a high luminance, as shown in Fig. 4A. Then the anode pulses (ANP0 through ANP639) are outputted having pulse widths shown in Figs. 4B through 4F whose width increases toward high luminance which is increased in accordance with the gradation level of pixel data.

The cathode driver 117 has a shift register 221. The shift register 221 shifts the scanning data (SD) output from the cathode timing generator 116 in synchronism with the vertical shift clock (VSC) output from the generator 116, and outputs the cathode pulses (CAP0 through CAP479) for driving the cathode electrodes.

Cathode electrodes 232 receive the cathode pulses (CAP0 through CAP479) output from the cathode driver 117, and anode electrodes 231 receive the anode pulses (ANP0 through ANP639) output from the anode driver 118, thereby outputting display data at a maximum display resolution of 640 x 480 dots (16 gradation levels).

Figs. 4A through 4F are timing charts showing the modulated pulse (MP) which is generated by the modulated pulse generator 113 and is supplied to the pulse width generator 213 of the anode driver 118. The MP has a rate of increase in width which increases toward high luminance. The anode pulses (ANP), at various gradation levels are generated responsive to the modulated pulse (MP). In Fig. 4A, a is the pulse width at a low luminance, and b is the pulse width at a high luminance. In Fig. 4D, c is the difference between the pulse widths of low-gradation pixel data ("0001" = gradation level "1" and "0010" = gradation level "2"), and in Fig. 4E, d is the difference between the pulse widths of high-gradation pixel data ("1110" = gradation level "14" and "1111" = gradation level "15").

As can be seen from these drawings, the pulse width of the modulated pulse (MP) is gradually increased from a low luminance toward a high luminance. Therefore, for example, low-gradation pixel data ("0001" = gradation level "1") is pulse-width modulated by the modulated pulse (MP) having the narrowest pulse width, and higher-gradation pixel data is pulse-width modulated by the modulated pulse (MP) having a wider pulse width.

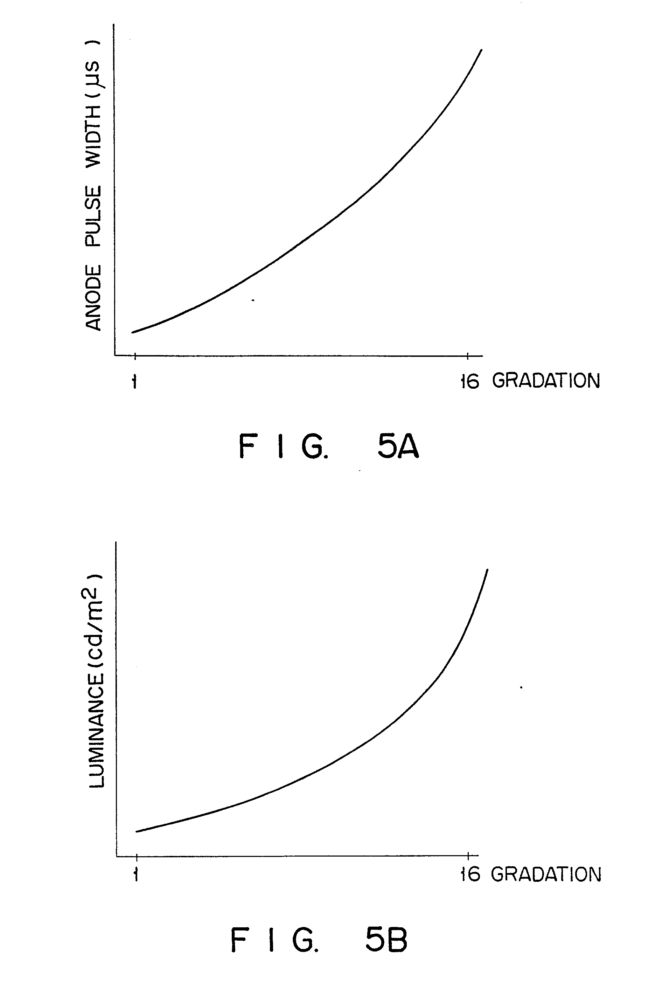

Fig. 5A shows the relationship between the anode pulse width and the gradation level, and Fig. 5B shows the relationship between the display luminance and the gradation level, in this case.

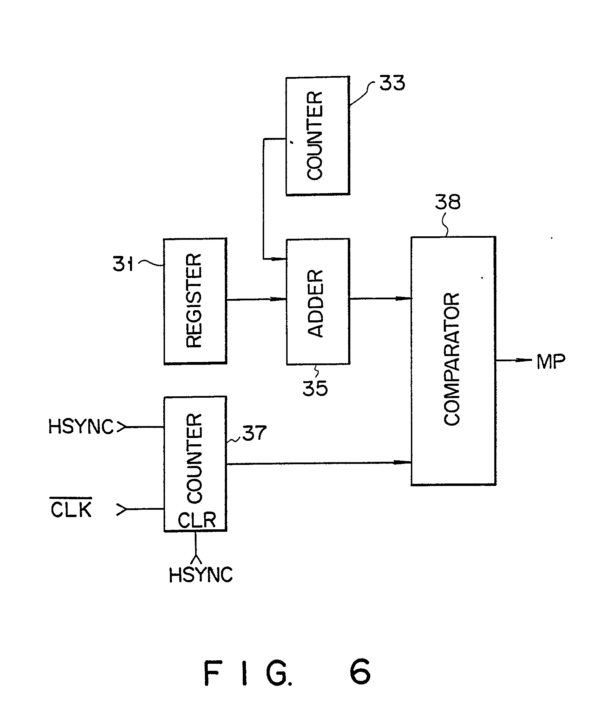

Fig. 6 shows a circuit for generating the modulated pulse MP. An initial value is set in a register 31. The initial value is set so that 16 anode pulses can be input for 640 modulated pulses. The initial value is set in the register 31 as a fixed value. A counter 33 is a counter for sequentially counting up a value which has "1" as an initial value. An adder 35 adds the value output from the register 31 to the value of the counter 33, thereby supplying, to a comparator 38, a reference value used for sequentially increasing the width of the modulated pulse. A counter 37 receives the horizontal sync signal HSYNC, and counts the signal HSYNC in synchronism with the clock signal CLK. The output value from the counter 37 is supplied to the comparator 38. When the value of the counter 37 becomes equal to the value of the adder 35, the comparator 38 outputs the variable modulated pulse MP.

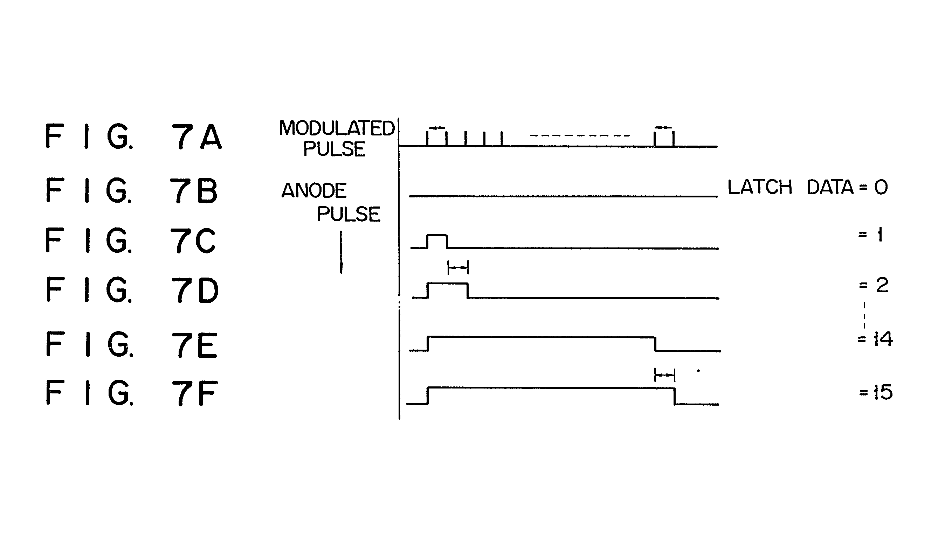

Note that Figs. 7A through 7F are timing charts showing a conventional modulated pulse and anode pulses at various gradation levels generated on the basis of the modulated pulses in comparison with Figs. 4A through 4F. As can be seen from Figs. 7A through 7F, all the pulse widths are the same in the prior art system.

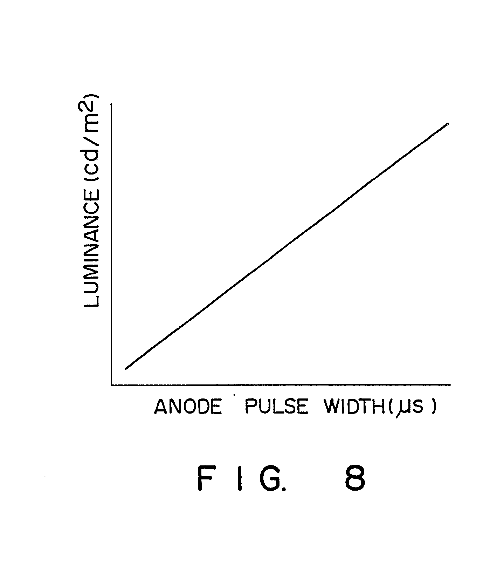

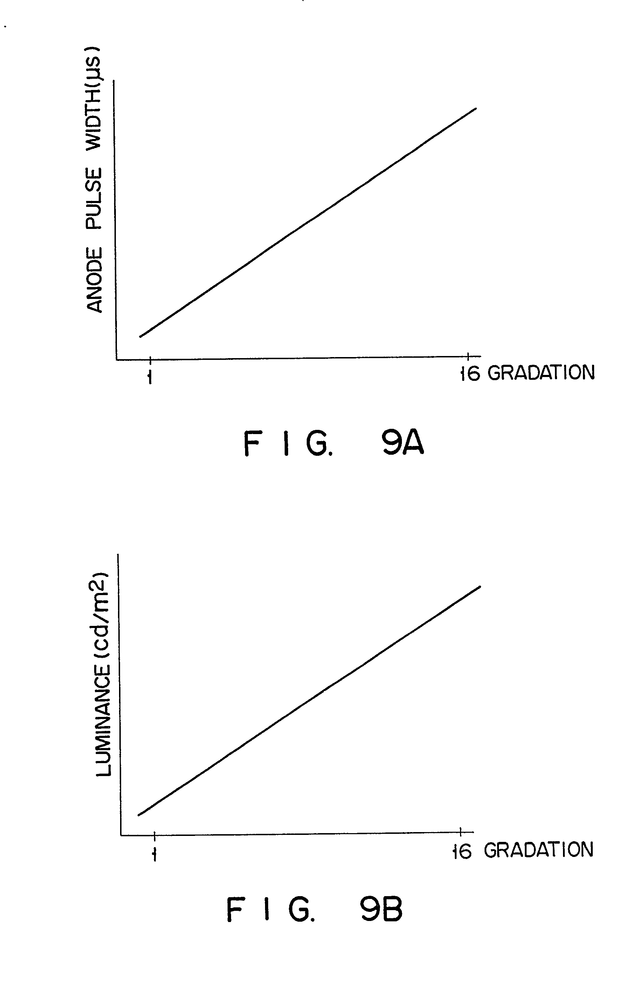

Fig. 8 shows the relationship between the display luminance and the anode pulse width. Figs. 9A and 9B respectively show the relationships between the anode pulse width using the conventional pulse-width modulation described above and the gradation level, and between the display luminance and the gradation level in comparison with Figs. 5A and 5B.

According to the above described embodiment, gradation correction matching with a CRT display unit (color display unit) can be easily accomplished by a plasma display unit without using a mechanism external of the plasma display unit. Therefore, in a plasma display drive system, a plasma display unit can be controlled at a gradation level corresponding to a display of the CRT display unit without intensionally performing gradation correction.

## Claims

1. A plasma display control system provided with a CRT controller (1), and a plasma display with cathode and anode electrodes for displaying a change in color using a gradation level, and allowing a CRT display to be connected thereto as an option, said CRT controller outputting vertical and horizontal sync signals having polarities and a data signal for display data having a gradation level to said color CRT display and said plasma display, characterized by comprising:
luminance variable setting means (114) for variably setting the luminance of said plasma display;
variable modulated pulse generating means (Fig. 6) for receiving the vertical and horizontal sync signals output from said CRT display controller and the luminance set by said luminance variable setting means and generating a variable modulated pulse whose pulse width is increased as the luminance is increased; and
drive means (117, 118) for driving said plasma display, said drive means comprising anode pulse generating means for generating an anode pulse having a pulse width unique to the gradation level indicated by the display data and applied to said anode electrodes on the basis of the variable modulated pulse generated by said variable modulated pulse generating means.

2. A system according to claim 1, characterized in that said luminance variable setting means and said drive means are incorporated in said plasma display.

3. A system according to claim 1, characterized by further comprising display resolution discriminating means (115) for determining the polarities of the vertical and horizontal sync signals output from said CRT display controller, and discriminating between display resolution in accordance with the combination of the polarities of the signals, said variable modulated pulse generating means generating a variable modulated pulse whose pulse width is increased as a luminance is increased, in accordance with the luminance set by said luminance variable setting means and the display resolution determined by said display resolution discriminating means.

4. A method of controlling a plasma display control system which has a CRT controller comprising a plasma display with cathode and anode electrodes for displaying a change in color using a gradation level, and which allows a CRT display to be connected thereto as an option, said CRT controller outputting vertical and horizontal sync signals having polarities and a data signal for display data having a gradation level to said color CRT display and said plasma display, characterized by comprising:
variably setting the luminance of said plasma display;
generating a variable modulated pulse whose pulse width is increased as the luminance is increased, upon reception of the vertical and horizontal sync signals output from said CRT controller; and
arranging anode pulse generating means for generating an anode pulse having a pulse width unique to the gradation level indicated by the display data and applied to said anode electrodes on the basis of the variable modulated pulse.

$\overline{DATA}$, HSYNC, VSYNC

CRT CONTROLLER

CRT

CLOCK MODULE

$\overline{ENAB}$

$\overline{CLK}$

PDP (PLASMA DISPLAY)

F I G. 1

EP 0 344 622 A2

F I G. 2

EP 0 344 622 A2

F I G. 3

EP 0 344 622 A2

F I G. 4A

F I G. 4B

F I G. 4C

F I G. 4D

F I G. 4E

F I G. 4F

MODULATED PULSE

ANODE PULSE

a

b

LATCH DATA = 0

= 1

c

= 2

= 14

d

= 15

F I G. 5A

F I G. 5B

F I G. 6

FIG. 7A   MODULATED PULSE

FIG. 7B   ANODE PULSE   LATCH DATA = 0

FIG. 7C   = 1

FIG. 7D   = 2

FIG. 7E   = 14

FIG. 7F   = 15

EP 0 344 622 A2

F I G.  8

EP 0 344 622 A2

F I G. 9A

F I G. 9B